# EUROPEAN PATENT APPLICATION

(11) **EP 4 675 983 A1**
(43) Date of publication of application: **07.01.2026**
(21) Application number: 25187533.2
(22) Date of filing: 04.07.2025
(51) Int. Cl.: H04L 12/40

(54) **CAN TRANSCEIVER**

(30) Priority: 04.07.2024 CN 202410895273
(71) Applicant: Suzhou Novosense Microelectronics Co., Ltd., Suzhou, Jiangsu 215000 (CN)
(72) Inventor: HU, Peng, Jiangsu, 215000 (CN); SUN, Yuanjie, Jiangsu, 215000 (CN); LIU, Binjie, Jiangsu, 215000 (CN)
(74) Representative: Murgitroyd & Company

(57) **Abstract**

A CAN transceiver, including a data transmission port, control port, high-side bus port, and low-side bus port; when the mode control signal is in a first state and data transmission signal is at logic low level, a voltage difference between the high-side signal and low-side signal is between 1.8 V and 3.3 V; when the mode control signal is in the first state and data transmission signal is at logic high level, the voltage difference between the two is between -1.8 V to -3.3 V; when the mode control signal is in a second state and data transmission signal is at logic low level, the voltage difference between the two is between 1.8 V to 3.3 V; when the mode control signal is in the second state and data transmission signal is at logic high level, the voltage difference between the two is between -300 mV and 300 mV.

## Description

### TECHNICAL FIELD

The present application relates to the field of CAN bus technologies, in particular to a CAN transceiver.

### BACKGROUND

The CAN transceiver serves as an interface between the CAN controller and the CAN bus. On the one hand, the CAN transceiver receives the data transmission signal TX sent by the CAN controller, converts it into a high-side signal VH and a low-side signal VL and transmits them to the CAN bus. On the other hand, the CAN transceiver generates a data reception signal RX based on the high-side signal VH and the low-side signal VL on the CAN bus, and transmits the data reception signal RX to the CAN controller. When the data transmission signal TX transitions from logic low level to logic high level, the high-side signal VH and the low-side signal VL are prone to oscillation due to the sudden change of the output resistance of the CAN controller, resulting erroneous outputs of the data reception signal RX, thus affecting the reliability and stability of the entire CAN transmission system. Usually, the erroneous outputs of the data reception signal RX may be avoided by reducing the transmission rate of the CAN bus, but this would reduce the signal transmission efficiency of the CAN bus.

Therefore, there is a need for a CAN transceiver that has a high transmission rate while also having a high reliability.

### SUMMARY

The present disclosure provides a CAN transceiver, to solve the problems of signal reflection and oscillation when the CAN transceiver switches dominant frames and recessive frames, so as to reduce the bit error rate and improve the transmission rate.

According to a first aspect of the present disclosure, the present disclosure provides a CAN transceiver, including: a data transmission port, configured to receive a data transmission signal; a control port, configured to receive a mode control signal; a high-side bus port, configured to output a high-side signal; and a low-side bus port, configured to output a low-side signal; where when the mode control signal is in a first state and the data transmission signal is at a logic low level, a voltage difference between the high-side signal and the low-side signal is between 1.8 V and 3.3 V; and when the mode control signal is in the first state and the data transmission signal is at a logic high level, the voltage difference between the high-side signal and the low-side signal is between -1.8 V and -3.3 V; and when the mode control signal is in a second state and the data transmission signal is at the logic low level, the voltage difference between the high-side signal and the low-side signal is between 1.8 V and 3.3 V; and when the mode control signal is in the second state and the data transmission signal is at the logic high level, the voltage difference between the high-side signal and the low-side signal is between -300 mV and 300 mV.

According to a second aspect of the present disclosure, the present disclosure provides a CAN transceiver including: a data transmission port, configured to receive a data transmission signal; a high-side bus port, configured to output a high-side signal; and a low-side bus port, configured to output a low-side signal; where when the data transmission signal is at a logic low level, a voltage difference between the high-side signal and the low-side signal is between 1.8 V and 3.3 V, and when the data transmission signal is at a logic high level, a voltage difference between the high-side signal and the low-side signal is between -1.8 V and -3.3 V.

According to a third aspect of the present disclosure, the present disclosure provides a CAN transceiver including: a data transmission port, configured to receive a data transmission signal; a high-side bus port, configured to output a high-side signal; a low-side bus port, configured to output a low-side signal; a high-side power transistor, having a first terminal, a second terminal, and a control terminal, where the first terminal of the high-side power transistor is configured to receive a supply voltage, and the control terminal of the high-side power transistor is configured to receive the data transmission signal; a first high-side switch, having a first terminal, a second terminal, and a control terminal, where the first terminal of the first high-side switch is coupled to the second terminal of the high-side power transistor, the second terminal of the first high-side switch is coupled to the high-side bus port, and the control terminal of the first high-side switch is configured to receive a first high-side control signal; a second high-side switch, having a first terminal, a second terminal, and a control terminal, where the first terminal of the second high-side switch is coupled to the second terminal of the first high-side switch, and the control terminal of the second high-side switch is configured to receive a second high-side control signal; a third high-side switch, having a first terminal, a second terminal, and a control terminal, where the first terminal of the third high-side switch is coupled to the second terminal of the second high-side switch, the second terminal of the third high-side switch is coupled to a first preset voltage VS1, and the control terminal of the third high-side switch is configured to receive a third high-side control signal; a first low-side switch, having a first terminal, a second terminal, and a control terminal, where the first terminal of the first low-side switch is coupled to the low-side bus port, and the control terminal of the first low-side switch is configured to receive a first low-side control signal; a low-side power transistor, having a first terminal, a second terminal, and a control terminal, where the first terminal of the low-side power transistor is coupled to the second terminal of the first low-side switch, the second terminal of the low-side power transistor is coupled to a reference ground, and the control terminal of the low-side power transistor is configured to receive a data transmission inverted signal, where the data transmission inverted signal is a complementary signal of the data transmission signal; a second low-side switch, having a first terminal, a second terminal, and a control terminal, where the first terminal of the second low-side switch is coupled to the low-side bus port, and the control terminal of the second low-side switch is configured to receive a second low-side control signal; and a third low-side switch, having a first terminal, a second terminal, and a control terminal, where the first terminal of the third low-side switch is configured to receive a second preset voltage, the second terminal of the third low-side switch is coupled to the second terminal of the second low-side switch, and the control terminal of the third low-side switch is configured to receive a third low-side control signal; where when the data transmission signal is at the logic low level, a voltage difference between the high-side signal and the low-side signal is between 1.8 V and 3.3 V, and when the data transmission signal is at the logic high level, a voltage difference between the high-side signal and the low-side signal is between -300 mV and 300 mV.

Based on one or more of the above-described embodiments of the present disclosure, at least the following technical effects can be realized.

According to the state of the mode control signal and the high/low level of the data transmission signal, the CAN transceiver controls the voltage values of the high-side bus and the low-side bus when the CAN transceiver is in the dominant bit state and the recessive bit state, so that the voltage difference between the high-side bus and the low-side bus is within the preset threshold range. By precisely controlling the voltage difference between the high-side bus and the low-side bus, the characteristics of the differential signal output by the CAN transceiver to the bus are effectively adjusted, so as to avoid the interference of signal reflection and oscillation on data transmission, thereby reducing the bit error rate and improving the transmission rate.

### BRIEF DESCRIPTION OF THE DRAWINGS

In order that the technical solutions in the present disclosure or related art may be described more clearly, brief introduction will be made to the accompanying drawings which are to be used in the description of the embodiments or the related art, it is clear that the accompanying drawings in the description are merely exemplary of the present disclosure, and other drawings may be made to those skilled in the art without involving any inventive effort.
FIG. 1 is a schematic structural diagram of an existing CAN transceiver;
FIG. 2 is a waveform chart illustrating signals of the output stage and input stage of an existing CAN transceiver;
FIG. 3 is a schematic structural diagram illustrating a CAN transceiver according to an embodiment of the present disclosure;
FIG. 4 is a schematic structural diagram illustrating a circuit of the CAN transceiver according to an embodiment of the present disclosure;
FIG. 5 is a waveform chart illustrating signals of the CAN transceiver as shown in FIG. 4;
FIG. 6 is a schematic structural diagram illustrating a circuit of the CAN transceiver according to one embodiment of the present disclosure;
FIG. 7 is a schematic structural diagram illustrating the CAN transceiver according to one embodiment of the present disclosure;
FIG. 8 is a schematic structural diagram illustrating a circuit of the CAN transceiver according to one embodiment of the present disclosure;
FIG. 9 is a waveform chart illustrating signals of the CAN transceiver as shown in FIG. 8;
FIG. 10 is a schematic structural diagram illustrating a circuit of the CAN transceiver according to one embodiment of the present disclosure;
FIG. 11 is a waveform chart illustrating signals of the CAN transceiver as shown in FIG. 10.

### DETAILED DESCRIPTION

In the description of the present disclosure, it should be noted that "coupled" as used throughout the specification and claims is defined as being directly or indirectly connected in an electrical or non-electrical manner. When one element is described as being "connected" or "coupled" to another element, it can be directly connected or coupled to another element, or one or more intervening elements may be disposed therebetween. Conversely, when one element is described as being "directly connected" or "directly coupled" to another element, there is no intervening element. Referring to "one embodiment", "embodiments", "one example" or "examples" throughout the specification means that specific features, structures, or characteristics described in connection with the embodiments or the examples may be included in at least one embodiment of the present application. Thus, the appearances of the phrases "in one embodiment", "in embodiments", "one example" or "examples" in various places throughout the specification do not necessarily all refer to the same embodiment or example. Furthermore, particular features, structures, or characteristics may be combined in one or more embodiments or examples by any suitable combination and/or sub-combination. Furthermore, those of ordinary skill in the art should understand that the drawings provided herein are for illustrative purposes and are not necessarily drawn to scale. Identical reference numerals indicate identical devices. The term "and/or" used herein includes any and all combinations of one or more related listed items.

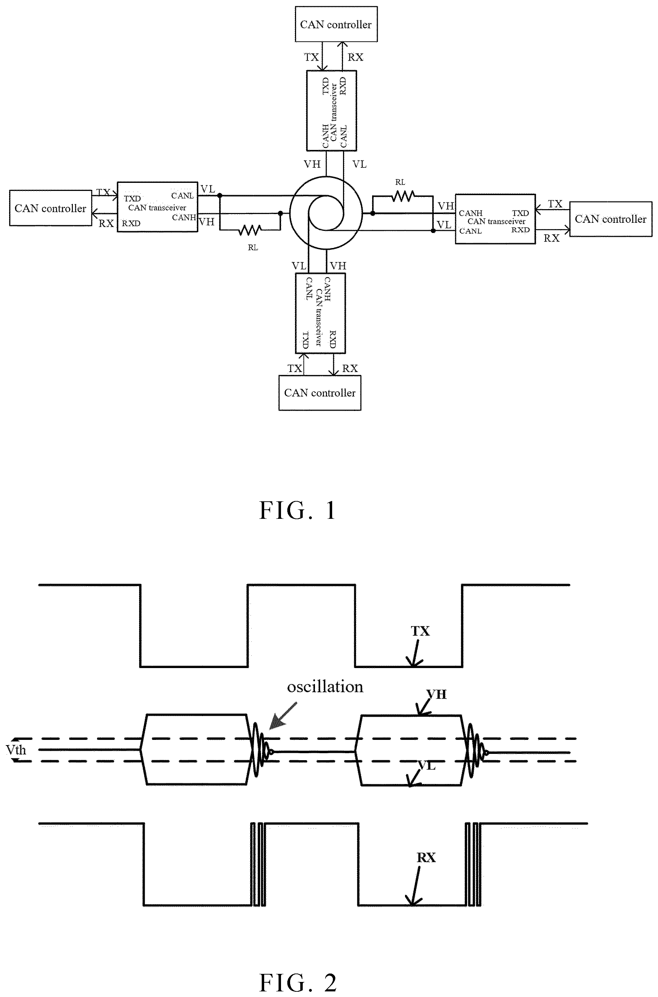

FIG. 1 is a schematic structural diagram of an existing CAN transceiver.

A CAN transceiver includes two main parts: an input stage of the CAN transceiver and an output stage of the CAN transceiver. The CAN transceiver includes a data transmission port TXD and a data reception port RXD. The input stage of the CAN transceiver is configured to receive the data transmission signal TX generated by the CAN controller and convert it into a high-side signal VH and a low-side signal VL conforming to the CAN bus signal specification, so as to transmit on the CAN bus. In the input stage, the data transmission signal TX is encoded and shaped, and then the signal is driven to be sent to the CAN bus. The output stage of the CAN transceiver is configured to demodulate, amplify and convert the high-side signal VH and the low-side signal VL from the CAN bus into the data reception signal RX, and the CAN transceiver outputs the data reception signal RX to the CAN controller through the data reception port RXD of the CAN transceiver.

The plurality of CAN transceivers in FIG. 1 are connected in a star topology, which is a network connection in which all nodes are directly connected to a central hub or switch. In a CAN bus system, star topology usually means that all CAN nodes are directly connected to the central CAN bus hub. This connection method enables all nodes to exchange and communicate data through the hub, thereby reducing the wiring distance, thus saving bus wiring costs and connecting more CAN transceivers.

The CAN bus transmits data using differential signals, where the high-side signal VH and the low-side signal VL are a pair of differential signals on the CAN bus. When the data transmission signal TX is at a logic low level, the voltage difference between the high-side signal VH and the low-side signal VL is high, and when the voltage difference between the high-side signal VH and the low-side signal VL is high, the data reception signal RX is at a logic high level. When the data transmission signal TX is at a logic high level, the voltage difference between the high-side signal VH and the low-side signal VL is low, and when the high-side signal VH and the low-side signal VL are equal, the data reception signal RX is at a logic low level.

In CAN bus communication, the transmission and reception of data are realized by changing the voltage difference between the high-side signal VH and the low-side signal VL to represent different data bits (dominant or recessive). The switching of dominant bits and implicit bits determines the differential level state on the CAN bus. In the dominant bit state, the voltage difference between the high-side signal VH and the low-side signal VL is large; and in the recessive bit state, the voltage difference between the high-side signal VH and the low-side signal VL is small. By recognizing the voltage difference between the high-side signal VH and the low-side signal VL, the receiver can interpret the data bit information transmitted by the sender.

FIG. 2 is a waveform chart illustrating signals of the output stage and input stage of an existing CAN transceiver. As shown in FIG. 2, when the bus output of the existing CAN transceiver is switched from dominant to recessive, the output impedance at the connection with the CAN bus suddenly becomes higher, resulting in signal reflection, causing signal oscillation, causing the data reception signal RX to oscillate, eventually causing the CAN transceiver to send the wrong signal. In CAN bus communication, the transition of the data reception signal RX from a logic low level to a logic high level is determined by the voltage difference defined in the CAN protocol. During the transition process, signal reflection will occur due to the sudden change of current and the impedance mismatch on the transmission line. If the output impedance of the CAN transceiver is too high or there is a super-large current change, this reflection will be more significant, resulting in distortion of the voltage waveform on the transmission line and even signal oscillation. The transceiver will receive an erroneous signal caused by waveform distortion, which affects the correct reception and transmission of data. This increase in bit error rate will lead to reliability problems of the system in high-speed transmission and long-distance transmission.

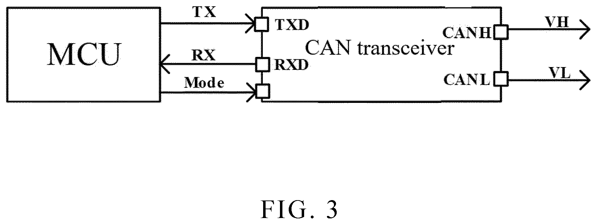

FIG. 3 is a schematic structural diagram illustrating a CAN transceiver according to an embodiment of the present disclosure. The CAN transceiver includes a data transmission port TXD, a data reception port RXD, a control port, a high-side bus port CANH, and a low-side bus port CANL. Where the data transmission port TXD receives the data transmission signal TX, the data reception port RXD outputs the data reception signal RX, the control port receives the mode control signal MODE, the high-side bus port CANH outputs the high-side signal VH, and the low-side bus port CANL outputs the low-side signal VL.

When the mode control signal MODE is in the first state and the data transmission signal TX is at a logic low level, the voltage difference between the high-side signal VH and the low-side signal VL is between 1.8 V and 3.3 V. When the mode control signal MODE is in the first state and the data transmission signal TX is at the logic high level, the voltage difference between the high-side signal VH and the low-side signal VL is between -1.8 V and -3.3 V. When the mode control signal MODE is in the second state and the data transmission signal TX is at a logic low level, the voltage difference between the high-side signal VH and the low-side signal VL is between 1.8 V and 3.3 V. When the mode control signal MODE is in the second state and the data transmission signal TX is at the logic high level, the voltage difference between the high-side signal VH and the low-side signal VL is between -300 mV and 300 mV. In one embodiment, when the mode control signal MODE is in the first state, the mode control signal MODE is at a logic high level, and when the mode control signal MODE is in the second state, the mode control signal MODE is at a logic low level.

In the embodiment shown in FIG. 3, the CAN transceiver further includes a data reception port RXD to output a data reception signal RX, where when the voltage difference between the high-side signal VH and the low-side signal VL is between 1.8 V and 3.3 V, the data reception signal RX is at a logic low level, and when the voltage difference between the high-side signal VH and the low-side signal VL is between -1.8 V and -3.3 V or between -300 mV and 300 mV, the data reception signal RX is at a logic high level. In one embodiment, the CAN transceiver further includes a data reception port RXD to output a data reception signal RX, where when the voltage difference between the high-side signal VH and the low-side signal VL is between 1.8 V and 3.3 V, the data reception signal RX is at a logic low level, and when the voltage difference between the high-side signal VH and the low-side signal VL is between -1.8 V and -3.3 V, the data reception signal RX is at a logic high level.

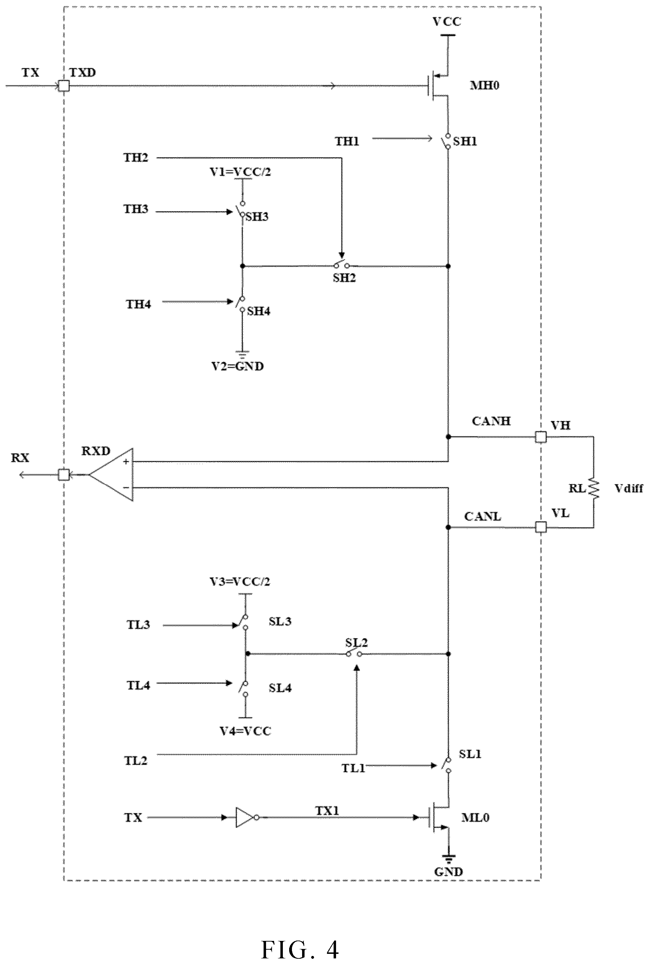

FIG. 4 is a schematic structural diagram illustrating a circuit of the CAN transceiver according to an embodiment of the present disclosure. The CAN transceiver further includes a high-side power transistor MH0, a first high-side switch SH1, a second high-side switch SH2, a third high-side switch SH3, a fourth high-side switch SH4, a first low-side switch SL1, a second low-side switch SL2, a third low-side switch SL3, a fourth low-side switch SL4, and a low-side power transistor ML0. The high-side power transistor MH0 has a first terminal, a second terminal, and a control terminal, where the first terminal of the high-side power transistor MH0 is coupled to the power supply voltage VCC, and the control terminal of the high-side power transistor MH0 receives the data transmission signal TX. It should be noted that the control terminal of the high-side power transistor MH0 receives the data transmission signal TX, which only indicates that the high-side power transistor MH0 is turned on or turned off under the control of the data transmission signal TX. In one embodiment, the control terminal of the high-side power transistor MH0 receives a high-side power transistor control signal generated according to the data transmission signal TX, and the high-side power transistor control signal may be an analog signal, and the voltage value thereof may be set according to the requirements of the circuit design. The first high-side switch SH1 has a first terminal, a second terminal, and a control terminal, where the first terminal of the first high-side switch SH1 is coupled to the second terminal of the high-side power transistor MH0, the second terminal of the first high-side switch SH1 is coupled to the high-side bus port CANH, and the control terminal of the first high-side switch SH1 receives the first high-side control signal TH1. The second high-side switch SH2 has a first terminal, a second terminal, and a control terminal, where the first terminal of the second high-side switch SH2 is coupled to the high-side bus port CANH, and the control terminal second high-side switch SH2 receives the second high-side control signal TH2. The third high-side switch SH3 has a first terminal, a second terminal, and a control terminal, where the first terminal of the third high-side switch SH3 is coupled to the second terminal of the second high-side switch SH2, the second terminal of the third high-side switch SH3 receives the first voltage V1, and the control terminal of the third high-side switch SH3 receives the third high-side control signal TH3. The fourth high-side switch SH4 has a first terminal, a second terminal, and a control terminal, where the first terminal of the fourth high-side switch SH4 is coupled to the second terminal of the second high-side switch SH2, the second terminal of the fourth high-side switch SH4 receives the second voltage V2, and the control terminal of the fourth high-side switch SH4 receives the fourth high-side control signal TH4.

The first low-side switch SL1 has a first terminal, a second terminal, and a control terminal, where the first terminal of the first low-side switch SL1 is coupled to the low-side bus port CANL, and the control terminal of the first low-side switch SL1 receives the first low-side control signal TL1. The second low-side switch SL2 has a first terminal, a second terminal, and a control terminal, where the first terminal of the second low-side switch SL2 is coupled to the low-side bus port CANL, and the control terminal of the second low-side switch SL2 receives the second low-side control signal TL2. The third low-side switch SL3 has a first terminal, a second terminal, and a control terminal, where the first terminal of the third low-side switch SL3 is coupled to the second terminal of the second low-side switch SL2, the second terminal of the third low-side switch SL3 receives the third voltage V3, and the control terminal of the third low-side switch SL3 receives the third low-side control signal TL3. The fourth low-side switch SL4 has a first terminal, a second terminal, and a control terminal, where the first terminal of the fourth low-side switch SL4 is coupled to the second terminal of the second low-side switch SL2, the second terminal of the fourth low-side switch SL4 receives the fourth voltage V4, and the control terminal of the fourth low-side switch SL4 receives the fourth low-side control signal TL4. The low-side power transistor ML0 has a first terminal, a second terminal, and a control terminal, where the first terminal of the low-side power transistor ML0 is coupled to the second terminal of the first low-side switch SL1, the second terminal of the low-side power transistor ML0 is coupled to the reference ground GND, and the control terminal of the low-side power transistor ML0 receives a data transmission inverted signal TX1, where the data transmission inverted signal TX1 is a complementary signal of the data transmission signal TX. It should be noted that the control terminal of the low-side power transistor ML0 receives the data transmission inverted signal TX1, which only indicates that the low-side power transistor ML0 is turned on or turned off under the control of the data transmission inverted signal TX1. In one embodiment, the control terminal of the low-side power transistor ML0 receives a low-side power transistor control signal generated according to the data transmission inverted signal TX1, and the low-side power transistor control signal may be an analog signal, and the voltage value thereof may be set according to the requirements of the circuit design. In FIG. 4, a load resistor RL is coupled between the high-side bus port CANH and the low-side bus port CANL, and the voltage across the load resistor RL is the load voltage Vdiff.

When the mode control signal MODE is in different states, each of the high-side control signals and the low-side control signals is at a respective logic level to control the conduction and cutoff of its corresponding high-side switch and low-side switch. Exemplarily, both of the high-side control signal and the low-side control signal include a logic low level and a logic high level, and the corresponding switch conduction situation changes when the logic level of the control signal changes.

When the mode control signal MODE is in the first state and the data transmission signal TX is at the logic low level, the high-side power transistor MH0, the first high-side switch SH1, the first low-side switch SL1, and the low-side power transistor ML0 are turned on, and the second high-side switch SH2, the third high-side switch SH3, the fourth high-side switch SH4, the second low-side switch SL2, the third low-side switch SL3, and the fourth low-side switch SL4 are turned off. The high-side power transistor MH0, and the first high-side switch SH1 are turned on so that a path is formed between the high-side bus port CANH and the supply voltage VCC, and the low-side power transistor ML0, and the first low-side switch SL1 are turned on so that a path is formed between the low-side bus port CANL and the reference ground GND, and the current passes from the supply voltage VCC to the reference ground GND through the load resistor RL, and the load voltage Vdiff is between 1.8 V and 3.3 V. In one embodiment, the value of the load voltage Vdiff is related to the supply voltage VCC, the load resistor RL, and the impedance of each device on the series path. In one embodiment, the load voltage Vdiff is equal to 2.2 V.

When the mode control signal MODE is in the first state and the data transmission signal TX is at the logic high level, the second high-side switch SH2, the fourth high-side switch SH4, the second low-side switch SL2, and the fourth low-side switch SL4 are turned on, and the high-side power transistor MH0, the first high-side switch SH1, the third high-side switch SH3, the first low-side switch SL1, the third low-side switch SL3, and the low-side power transistor ML0 are turned off. The first high-side switch SH1 is turned off, and the line between the high-side bus port CANH and the power supply voltage VCC is disconnected. At this time, the second high-side switch SH2, and the fourth high-side switch SH4 are turned on, and the high-side bus port CANH receives the first voltage V1. The first low-side switch SL1 is turned off, and the line between the low-side bus port CANL and the reference ground GND is disconnected. At this time, the second low-side switch SL2, and the fourth low-side switch SL4 are turned on, and the line between the low-side bus port CANL and the fourth voltage V4 is connected. In the embodiment of FIG. 4, the first voltage V1 is the reference ground GND, the fourth voltage V4 is the supply voltage VCC, and the current flows from the fourth voltage V4 to the reference ground GND through the load resistor RL. At this time, the load voltage Vdiff is between -1.8 V and -3.3 V. In one embodiment, the value of the load voltage Vdiff is related to the fourth voltage V4, the first voltage V1, the load resistor RL and the impedance of each device on the series path. In one embodiment, the load voltage Vdiff is -2.2 V.

When the mode control signal MODE is in the second state and the data transmission signal TX is at a logic low level, the high-side power transistor MH0, the first high-side switch SH1, the first low-side switch SL1, and the low-side power transistor ML0 are turned on, and the second high-side switch SH2, the third high-side switch SH3, the fourth high-side switch SH4, the second low-side switch SL2, the third low-side switch SL3, and the fourth low-side switch SL4 are turned off. The current flows from the supply voltage VCC to the reference ground GND through the load resistor RL, the load voltage Vdiff is between 1.8 V and 3.3 V. In one embodiment, the value of the load voltage Vdiff is related to the supply voltage VCC and the impedance of each device on the series path. In one embodiment, the load voltage Vdiff is equal to 2.2 V

When the mode control signal MODE is in the second state and the data transmission signal TX is at the logic high level, in the first operation cycle, the second high-side switch SH2, the third high-side switch SH3, the second low-side switch SL2, and the third low-side switch SL3 are turned on, the high-side power transistor MH0, the first high-side switch SH1, the fourth high-side switch SH4, the first low-side switch SL1, the fourth low-side switch SL4, and the low-side power transistor ML0 are turned off, the high-side signal VH is equal to the low-side signal VL, and the load voltage Vdiff is between -300 mV and 300 mV. In one embodiment, the load voltage Vdiff is 0 V. In the second operation cycle, the high-side power transistor MH0, the first high-side switch SH1, the second high-side switch SH2, the third high-side switch SH3, the fourth high-side switch SH4, the first low-side switch SL1, the second low-side switch SL2, the third low-side switch SL3, the fourth low-side switch SL4, and the low-side power transistor ML0 are all turned off. The load voltage Vdiff is between -300 mV and 300 mV. In one embodiment, the load voltage Vdiff is 0 V

In the embodiment shown in FIG. 4, the high-side power transistor MH0 is a P-type field effect transistor, and the low-side power transistor ML0 is an N-type field effect transistor. In one embodiment, the first high-side switch SH1, the second high-side switch SH2, the third high-side switch SH3, the fourth high-side switch SH4, the first low-side switch SL1, the second low-side switch SL2, the third low-side switch SL3, and the fourth low-side switch SL4 are N-type field effect transistors.

In the embodiment shown in FIG. 4, the CAN transceiver further includes a data reception port RXD to output a data reception signal RX, where when the voltage difference between the high-side signal VH and the low-side signal VL is between 1.8 V and 3.3 V, the data reception signal RX is at a logic low level, and when the voltage difference between the high-side signal VH and the low-side signal VL is between -1.8 V and -3.3 V or between -300 mV and 300 mV, the data reception signal RX is at a logic high level.

In one embodiment, the first voltage V1 is between 3.5 V and 5.5 V, the second voltage V2 is between -1 V and 1 V, the third voltage V3 is between 3.5 V and 5.5 V, and the fourth voltage V4 is between 4.5 V and 5.5 V. In one embodiment, where the first voltage V1 and the third voltage V3 are equal to half of the supply voltage VCC, the second voltage V2 is equal to the voltage of the reference ground GND, and the fourth voltage V4 is equal to the supply voltage VCC.

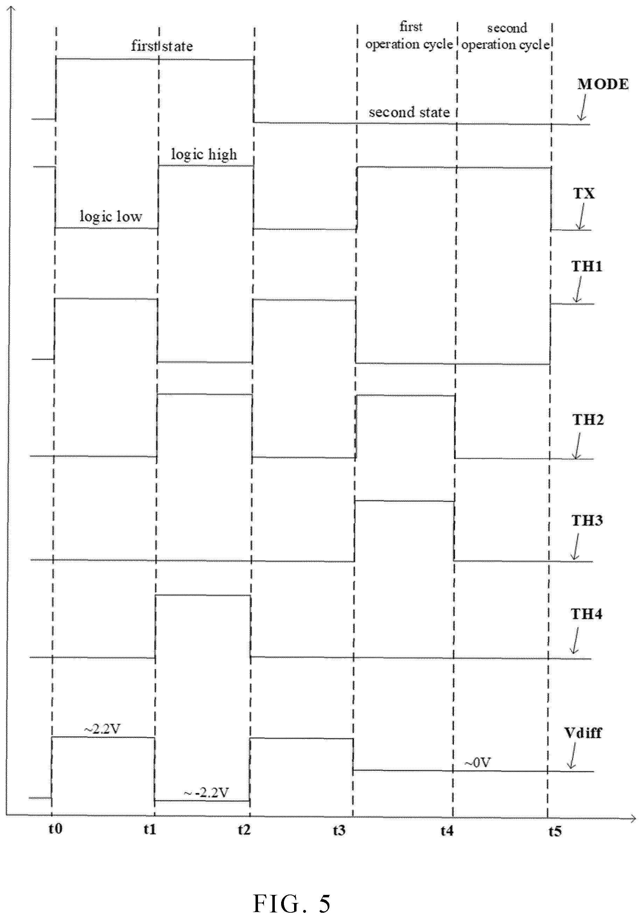

FIG. 5 is a waveform chart illustrating signals of the CAN transceiver as shown in FIG. 4, and the waveform of each signal in FIG. 5 will be described with reference to the CAN transceiver configuration shown in FIG. 4. It should be noted that, in the CAN transceiver configuration shown in FIG. 4, the control logic and waveform conditions of the first low-side control signal TL1 to the fourth low-side control signal TL4 are consistent with the control logic and waveform conditions of the first high-side control signal TH1 to the fourth high-side control signal TH4, and therefore, only the waveform changes of the high-side control signals TH1 to TH4 are shown in FIG. 5 for explanation, and the waveform changes of the low-side control signals TL1 to TH2 are the same, and will not be redundantly described herein.

During the period from time t0 to time t1, the mode control signal MODE is in the first state and the data transmission signal TX is at a logic low level, at this time, the first high-side control signal TH1 and the first low-side control signal TL1 are at a logic high level, the second high-side control signal TH2 and the second low-side control signal TL2 are at a logic low level, the third high-side control signal TH3 and the third low-side control signal TL3 are at a logic low level, and the fourth high-side control signal TH4 and the fourth low-side control signal TL4 are at a logic low level. Since the first high-side switch SH1, the second high-side switch SH2, the third high-side switch SH3, the fourth high-side switch SH4, the first low-side switch SL1, the second low-side switch SL2, the third low-side switch SL3, and the fourth low-side switch SL4 are N-type field effect transistors, therefore during the period from time t0 to time t1, the high-side power transistor MH0, the first high-side switch SH1, the first low-side switch SL1, and the low-side power transistor ML0 are turned on, and the second high-side switch SH2, the third high-side switch SH3, the fourth high-side switch SH4, the second low-side switch SL2, the third low-side switch SL3, and the fourth low-side switch SL4 are turned off. During the period from time t0 to time t1, the load voltage Vdiff is 2.2 V.

During the period from time t1 to time t2, the mode control signal MODE is in the first state, the data transmission signal TX is at the logic high level, the first high-side control signal TH1 and the first low-side control signal TL1 are at the logic low level, the second high-side control signal TH2 and the second low-side control signal TL2 are at the logic high level, the third high-side control signal TH3 and the third low-side control signal TL3 are at the logic low level, and the fourth high-side control signal TH4 and the fourth low-side control signal TL4 are at the logic high level. Therefore, during the period from time t1 to time t2, the second high-side switch SH2, the fourth high-side switch SH4, the second low-side switch SL2, and the fourth low-side switch SL4 are turned on, and the high-side power transistor MH0, the first high-side switch SH1, the third high-side switch SH3, the first low-side switch SL1, the third low-side switch SL3, and the low-side power transistor ML0 are turned off. During the period from time t1 to time t2, the load voltage Vdiff is -2.2 V.

During the period from time t2 to time t3, the mode control signal MODE is in the second state, the data transmission signal TX is at the logic low level, the first high-side control signal TH1 and the first low-side control signal TL1 are at the logic high level, the second high-side control signal TH2 and the second low-side control signal TL2 are at the logic low level, the third high-side control signal TH3 and the third low-side control signal TL3 are at the logic low level, and the fourth high-side control signal TH4 and the fourth low-side control signal TL4 are at the logic low level. Therefore, during the period from time t2 to time t3, the high-side power transistor MH0, the first high-side switch SH1, and the first low-side switch SL1 are turned on, and the second high-side switch SH2, the third high-side switch SH3, the fourth high-side switch SH4, the second low-side switch SL2, the third low-side switch SL3, the fourth low-side switch SL4, and the low-side power transistor ML0 are turned off. During the period from time t2 to time t3, the load voltage Vdiff is 2.2 V.

During the time period from time t3 to time t4 (the first operation cycle), the mode control signal MODE is in the second state, the data transmission signal TX is at a logic high level, the first high-side control signal TH1 and the first low-side control signal TL1 are at a logic low level, the second high-side control signal TH2 and the second low-side control signal TL2 are at a logic high level, the third high-side control signal TH3 and the third low-side control signal TL3 are at a logic high level, and the fourth high-side control signal TH4 and the fourth low-side control signal TL4 are at a logic low level. The high-side power transistor MH0, the first high-side switch SH1, the fourth high-side switch SH4, the low-side power transistor ML0, the first low-side switch SL1, and the fourth low-side switch SL4 are turned off, and the second high-side switch SH2, the third high-side switch SH3, the second low-side switch SL2, and the third low-side switch SL3 are turned on. During the period from time t3 to time t4, the load voltage Vdiff is 2.2 V.

During the period from time t4 to time t5 (the second operation cycle), the first high-side control signal TH1 and the first low-side control signal TL1 are at a logic low level, the second high-side control signal TH2 and the second low-side control signal TL2 are at a logic low level, the third high-side control signal TH3 and the third low-side control signal TL3 are at a logic low level, and the fourth high-side control signal TH4 and the fourth low-side control signal TL4 are at a logic low level. During the period from time t4 to time t5, the high-side power transistor MH0, the first high-side switch SH1, the fourth high-side switch SH4, the low-side power transistor ML0, the first low-side switch SL1, the fourth low-side switch SL4, the second high-side switch SH2, the third high-side switch SH3, the second low-side switch SL2, and the third low-side switch SL3 are all turned off. During the period from time t4 to time t5, the load voltage Vdiff is 2.2 V.

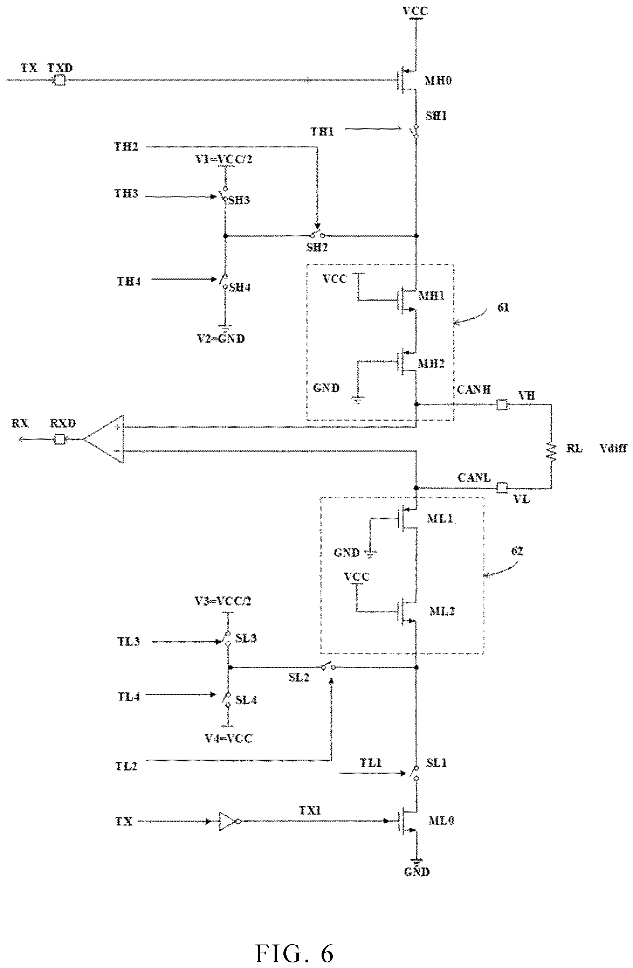

FIG. 6 is a schematic structural diagram illustrating a circuit of the CAN transceiver according to one embodiment of the present disclosure. Compared with the CAN transceiver shown in FIG. 4, the CAN transceiver in the present embodiment further includes a high-side voltage tolerance circuit 61 and a low-side voltage tolerance circuit 62.

The high-side power transistor MH0 has a first terminal, a second terminal, and a control terminal, where the first terminal of the high-side power transistor MH0 receives the supply voltage VCC, and the control terminal of the high-side power transistor MH0 receives the data transmission signal TX. The first high-side switch SH1 has a first terminal, a second terminal, and a control terminal, where the first terminal of the first high-side switch SH1 is coupled to the second terminal of the high-side power transistor MH0, and the control terminal of the first high-side switch SH1 receives the first high-side control signal TH1. The high-side voltage tolerance circuit 61 has a first terminal and a second terminal, where the first terminal of the high-side voltage tolerance circuit 61 is coupled to the second terminal of the high-side power transistor MH0, and the second terminal of the high-side voltage tolerance circuit 61 is coupled to the high-side bus port CANH. The second high-side switch SH2 has a first terminal, a second terminal, and a control terminal, where the first terminal of the second high-side switch SH2 is coupled to the first terminal of the first power transistor MH1, and the control terminal of the second high-side switch SH2 receives the second high-side control signal TH2. The third high-side switch SH3 has a first terminal, a second terminal, and a control terminal, where the first terminal of the third high-side switch SH3 is coupled to the second terminal of the second high-side switch SH2, the second terminal of the third high-side switch SH3 is coupled to the first voltage V1, and the control terminal of the third high-side switch SH3 receives the third high-side control signal TH3. The fourth high-side switch SH4 has a first terminal, a second terminal, and a control terminal, where the first terminal of the fourth high-side switch SH4 is coupled to the second terminal of the second high-side switch SH2, the second terminal of the fourth high-side switch SH4 is coupled to the second voltage V2, and the control terminal of the fourth high-side switch SH4 receives the fourth high-side control signal TH4.

The low-side voltage tolerance circuit 62 has a first terminal and a second terminal, where the first terminal of the low-side voltage tolerance circuit 62 is coupled to the low-side bus port CANL. The first low-side switch SL1 has a first terminal, a second terminal, and a control terminal, where the first terminal of the first low-side switch SL1 is coupled to the second terminal of the low-side voltage tolerance circuit 62, and the control terminal of the first low-side switch SL1 receives the first low-side control signal TL1. The second low-side switch SL2 has a first terminal, a second terminal, and a control terminal, where the first terminal of the second low-side switch SL2 is coupled to the second terminal of the low-side voltage tolerance circuit 62, and the control terminal of the second low-side switch SL2 receives the second low-side control signal TL2. The third low-side switch SL3 has a first terminal, a second terminal, and a control terminal, where the first terminal of the third low-side switch SL3 is coupled to the second terminal of the second low-side switch SL2, the second terminal of the third low-side switch SL3 receives the third voltage V3, and the control terminal of the third low-side switch SL3 receives the third low-side control signal TL3. And the fourth low-side switch SL4 has a first terminal, a second terminal, and a control terminal, where the first terminal of the fourth low-side switch SL4 is coupled to the second terminal of the second low-side switch SL2, the second terminal of the fourth low-side switch SL4 receives the fourth voltage V4, and the control terminal of the fourth low-side switch SL4 receives the fourth low-side control signal TL4.

In the embodiment shown in FIG. 6, the high-side voltage tolerance circuit 61 includes a first power transistor MH1 and a second power transistor MH2, and the low-side voltage tolerance circuit 62 includes a third power transistor ML1 and a fourth power transistor ML2. The first power transistor MH1 has a first terminal, a second terminal, and a control terminal, where the first terminal of the first power transistor MH1 is coupled to the second terminal of the first high-side switch SH1, and the control terminal of the first power transistor MH1 is coupled to the power supply voltage VCC. The second power transistor MH2 has a first terminal, a second terminal, and a control terminal, where the first terminal of the second power transistor MH2 is coupled to the second terminal of the first power transistor MH1, the second terminal of the second power transistor MH2 is coupled to the high-side bus port CANH, and the control terminal of the second power transistor MH2 is coupled to the reference ground GND. The third power transistor ML1 has a first terminal and a second terminal, where the first terminal of the third power transistor ML1 is coupled to the low-side bus port CANL, and the control terminal of the third power transistor ML1 is coupled to the reference ground GND. The fourth power transistor ML2 has a first terminal, a second terminal, and a control terminal, where the first terminal of the fourth power transistor ML2 is coupled to the second terminal of the third power transistor ML1, and the control terminal of the fourth power transistor ML2 receives the power supply voltage VCC.

In the embodiment shown in FIG. 6, the first power transistor MH1, the fourth power transistor ML2 are N-type field effect transistors, the second power transistor MH2, and the third power transistor ML1 are P-type field effect transistors. Compared with the embodiment shown in FIG. 4, by adding a high-side voltage tolerance circuit including a first power transistor MH1 and a second power transistor MH2, and a low-side voltage tolerance circuit including a third power transistor ML1 and a fourth power transistor ML2, the CAN transceiver shown in FIG. 6 obtains a better voltage tolerance capability. It should be noted that the high-side voltage tolerance circuit 61 including the first power transistor MH1 and the second power transistor MH2, and the low-side voltage tolerance circuit 62 including the third power transistor ML1 and the fourth power transistor ML2 are merely illustrative examples, and any circuit structure capable of realizing the functions of the high-side voltage tolerance circuit 61 and the low-side voltage tolerance circuit 62 is included in the present application.

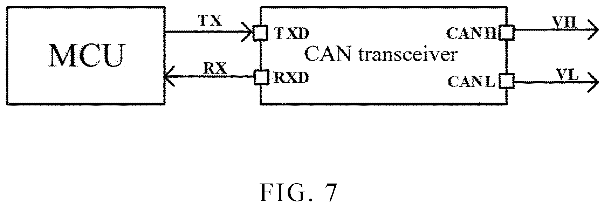

FIG. 7 is a schematic structural diagram illustrating the CAN transceiver according to one embodiment of the present disclosure. The CAN transceiver includes a data transmission port, a high-side bus port CANH, and a low-side bus port CANL. Where the data transmission port TXD receives the data transmission signal TX, the high-side bus port CANH outputs the high-side signal VH, and the low-side bus port CANL outputs the low-side signal VL. Where when the data transmission signal TX is at a logic low level, the voltage difference between the high-side signal VH and the low-side signal VL is between 1.8 V to 3.3 V, and when the data transmission signal TX is at a logic high level, the voltage difference between the high-side signal VH and the low-side signal VL is between -1.8 V to -3.3 V

In the embodiment shown in FIG. 7, the CAN transceiver further includes a data reception port RXD to output a data reception signal RX, where when the voltage difference between the high-side signal VH and the low-side signal VL is between 1.8 V and 3.3 V, the data reception signal RX is at a logic low level, and when the voltage difference between the high-side signal VH and the low-side signal VL is between -1.8 V and -3.3 V, the data reception signal RX is at a logic high level.

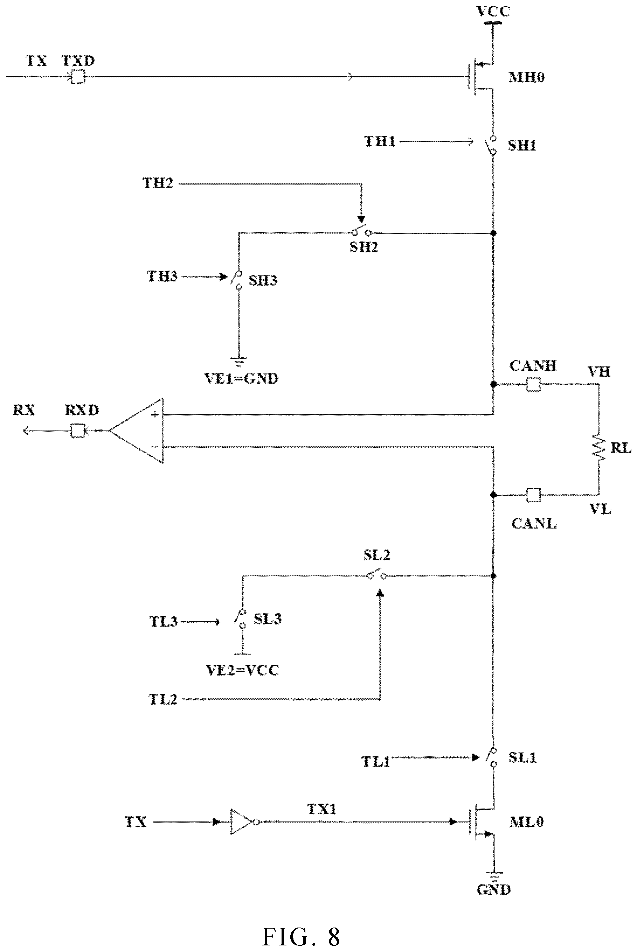

FIG. 8 is a schematic structural diagram illustrating a circuit of the CAN transceiver according to one embodiment of the present disclosure. The high-side power transistor MH0 has a first terminal, a second terminal, and a control terminal, where the first terminal of the high-side power transistor MH0 is coupled to the power supply voltage VCC, and the control terminal of the high-side power transistor MH0 receives the data transmission signal TX. The first high-side switch SH1 has a first terminal, a second terminal, and a control terminal, where the first terminal of the first high-side switch SH1 is coupled to the second terminal of the high-side power transistor MH0, and the control terminal of the first high-side switch SH1 receives the first high-side control signal TH1. The second high-side switch SH2 has a first terminal, a second terminal, and a control terminal, where the first terminal of the second high-side switch SH2 is coupled to the second terminal of the first high-side switch SH1, and the control terminal of the second high-side switch SH2 receives the second high-side control signal TH2. The third high-side switch SH3 has a first terminal, a second terminal, and a control terminal, where the first terminal of the third high-side switch SH3 is coupled to the second terminal of the second high-side switch SH2, the second terminal of the third high-side switch SH3 is coupled to the first reference voltage VE1, and the control terminal of the third high-side switch SH3 receives the third high-side control signal TH3. The first low-side switch SL1 has a first terminal, a second terminal, and a control terminal, where the first terminal of the first low-side switch SL1 is coupled to the low-side bus port CANL, and the control terminal of the first low-side switch SL1 receives the first low-side control signal TL1.

The low-side power transistor ML0 has a first terminal, a second terminal, and a control terminal, where the first terminal of the low-side power transistor ML0 is coupled to the second terminal of the first low-side switch SL1, the second terminal of the low-side power transistor ML0 is coupled to the reference ground GND, and the control terminal of the low-side power transistor ML0 receives the data transmission inverted signal TX1, where the data transmission inverted signal TX1 is a complementary signal of the data transmission signal TX. The second low-side switch SL2 has a first terminal, a second terminal, and a control terminal, where the first terminal of the second low-side switch SL2 is coupled to the first terminal of the first low-side switch SL1, and the control terminal of the second low-side switch SL2 receives the second low-side control signal TL2. The third low-side switch SL3 has a first terminal, a second terminal, and a control terminal, where the first terminal of the third low-side switch SL3 is coupled to the second terminal of the second low-side switch SL2, the second terminal of the third low-side switch SL3 receives the second reference voltage VE2, and the control terminal of the third low-side switch SL3 receives the third low-side control signal TL3.

In the embodiment shown in FIG. 8, when the data transmission signal TX is at a logic low level, the high-side power transistor MH0, the first high-side switch SH1, the first low-side switch SL1, and the low-side power transistor ML0 are turned on, and the second high-side switch SH2, the third high-side switch SH3, the second low-side switch SL2, and the third low-side switch SL3 are all turned off, so that the line between the high-side bus port CANH and the supply voltage VCC is connected, and the line between the low-side bus port CANL and the reference ground GND is connected. The current flows through the load resistor RL, and the load voltage Vdiff is between 1.8V and 3.3V. When the data transmission signal TX is at the logic high level, the second high-side switch SH2, the third high-side switch SH3, the second low-side switch SL2, and the third low-side switch SL3 are all turned on, so that the line between the high-side bus port CANH and the first reference voltage VE1 is connected, and the line between the low-side bus port CANL and the second reference voltage VE2 is connected. The high-side power transistor MH0, the first high-side switch SH1, the first low-side switch SL1, and the low-side power transistor ML0 are turned off, so that the line between the high-side bus port CANH and the power supply voltage VCC is disconnected, and the line between the low-side bus port CANL and the reference ground GND is disconnected. In the embodiment shown in FIG. 8, the first reference voltage VE1 is the voltage of reference ground, the second reference voltage VE2 is the supply voltage VCC, and the load voltage Vdiff is between -1.8 V and -3.3 V.

In the embodiment shown in FIG. 8, the high-side power transistor MH0 is a P-type field effect transistor, and the low-side power transistor ML0 is an N-type field effect transistor. In the embodiment shown in FIG. 8, the first high-side switch SH1, the second high-side switch SH2, the third high-side switch SH3, the first low-side switch SL1, the second low-side switch SL2, and the third low-side switch SL3 are N-type field effect transistors. In the embodiment shown in FIG. 8, the supply voltage VCC is between 4.5 V and 5.5 V. The first reference voltage VE1 is between -1 V and 1 V, and the second reference voltage VE2 is between 3.5 V and 5.5 V. In the embodiment shown in FIG. 8, the CAN transceiver further includes a data reception port RXD to output a data reception signal RX, where when the voltage difference between the high-side signal VH and the low-side signal VL is between 1.8 V and 3.3 V, the data reception signal RX is at a logic low level, and when the voltage difference between the high-side signal VH and the low-side signal VL is between -1.8 V and -3.3 V, the data reception signal RX is at a logic high level. In FIG. 8, the CAN transceiver further has an output resistance Rdiff, which is a resistance between the high-side bus port CANH and the low-side bus port CANL port of the CAN transceiver. For example, in the embodiment shown in FIG. 8, when the data transmission signal TX is at the logic low level, the high-side power transistor MH0, the first high-side switch SH1, the first low-side switch SL1, and the low-side power transistor ML0 are all turned on, and the output resistance Rdiff is the sum of the on-resistance of the high-side power transistor MH0, the on-resistance of the first high-side switch SH1, the on-resistance of the first low-side switch SL1, and the on-resistance of the low-side power transistor ML0. In one embodiment, when the data transmission signal TX is at the logic low level, the output resistance Rdiff is 40 Ω. When the data transmission signal TX is at the logic high level, the second high-side switch SH2, the third high-side switch SH3, the second low-side switch SL2, and the third low-side switch SL3 are all turned on, and the output resistance Rdiff is the sum of the on-resistance of the second high-side switch SH2, the on-resistance of the third high-side switch SH3, the on-resistance of the second low-side switch SL2, and the on-resistance of the third low-side switch SL3. In one embodiment, when the data transmission signal TX is at the logic high level, the output resistance Rdiff is 40 Ω.

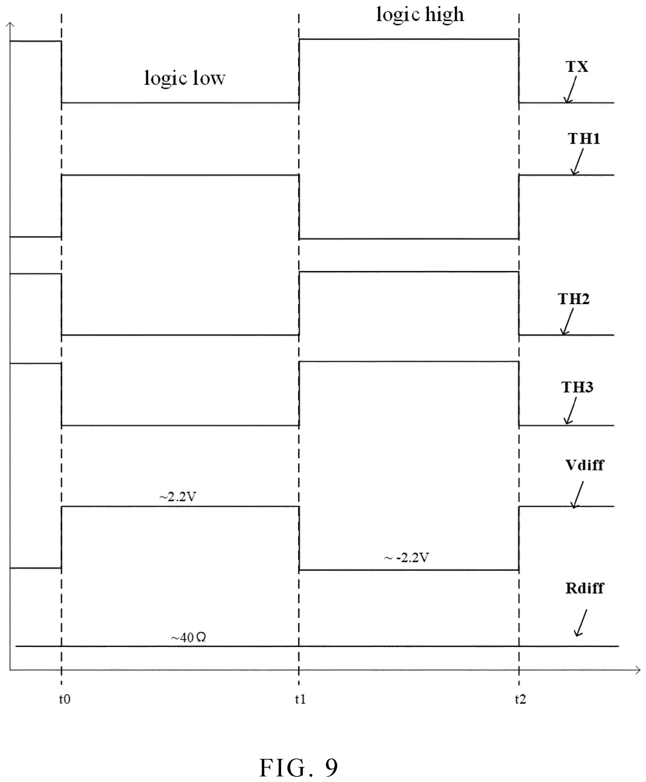

FIG. 9 is a waveform chart illustrating signals of the CAN transceiver as shown in FIG. 8, and the waveform of each signal in FIG. 9 will be described with reference to the CAN transceiver structure shown in FIG. 8.

During the period from time t0 to time t1, the data transmission signal TX is at a logic low level, at this time, the first high-side control signal TH1 and the first low-side control signal TL1 are at the logic high level, the second high-side control signal TH2 and the second low-side control signal TL2 are at the logic low level, and the third high-side control signal TH3 and the third low-side control signal TL3 are at the logic low level. Since the first high-side switch SH1, the second high-side switch SH2, the third high-side switch SH3, the first low-side switch SL1, the second low-side switch SL2, and the third low-side switch SL3 are N-type field effect transistors, therefore during the period from time t0 to time t1, the high-side power transistor MH0, the low-side power transistor ML0, the first high-side switch SH1, and the first low-side switch SL1 are turned on, and the second high-side switch SH2, the third high-side switch SH3, the second low-side switch SL2, and the third low-side switch SL3 are turned off. During the period from time t0 to time t1, the load voltage Vdiff is 2.2 V.

During the period from time t1 to time t2, the data transmission signal TX is at a logic high level, the first high-side control signal TH1 and the first low-side control signal TL1 are at a logic low level, the second high-side control signal TH2 and the second low-side control signal TL2 are at a logic high level, and the third high-side control signal TH3 and the third low-side control signal TL3 are at a logic high level. Therefore, during the period from time t1 to time t2, the second high-side switch SH2, the second low-side switch SL2, the third high-side switch SH3, and the third low-side switch SL3 are all turned on, and the high-side power transistor MH0, the low-side power transistor ML0, the first high-side switch SH1, and the first low-side switch SL1 are turned off. During the period from time t1 to time t2, the load voltage Vdiff is -2.2 V

During the period from time t0 to time t2, the output impedance Rdiff between the high-side bus VH and the low-side bus VL remains unchanged at 40 Ω.

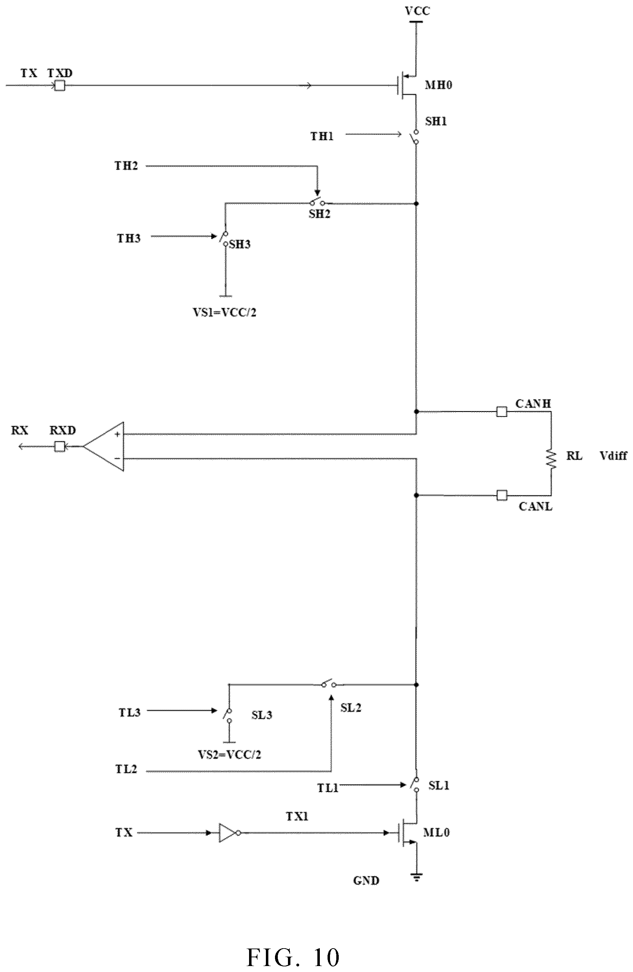

FIG. 10 is a schematic structural diagram illustrating a circuit of the CAN transceiver according to one embodiment of the present disclosure, which includes a data transmission port TXD configured to receive a data transmission signal TX, a high-side bus port CANH configured to output a high-side signal VH, and a low-side bus port CANL configured to output a low-side signal VL. The high-side power transistor MH0 has a first terminal, a second terminal, and a control terminal, where the first terminal of the high-side power transistor MH0 receives the supply voltage VCC, and the control terminal of the high-side power transistor MH0 receives the data transmission signal TX. The first high-side switch SH1 has a first terminal, a second terminal, and a control terminal, where the first terminal of the first high-side switch SH1 is coupled to the second terminal of the high-side power transistor MH0, the second terminal of the first high-side switch SH1 is coupled to the high-side bus port CANH, and the control terminal of the first high-side switch SH1 receives the first high-side control signal TH1. The second high-side switch SH2 has a first terminal, a second terminal, and a control terminal, where the first terminal of the second high-side switch SH2 is coupled to a second terminal of the first high-side switch SH1, and the control terminal of the second high-side switch SH2 receives the second high-side control signal TH2. The third high-side switch SH3 has a first terminal, a second terminal, and a control terminal, where the first terminal of the third high-side switch SH3 is coupled to the second terminal of the second high-side switch SH2, the second terminal of the third high-side switch SH3 is coupled to the first preset voltage VS1, and the control terminal of the third high-side switch SH3 receives the third high-side control signal TH3.

The first low-side switch SL1 has a first terminal, a second terminal, and a control terminal, where the first terminal of the first low-side switch SL1 is coupled to the low-side bus port CANL, and the control terminal of the first low-side switch SL1 receives the first low-side control signal TL1. The low-side power transistor ML0 has a first terminal, a second terminal, and a control terminal, where the first terminal of the low-side power transistor ML0 is coupled to the second terminal of the first low-side switch SL1, the second terminal of the low-side power transistor ML0 is coupled to the reference ground GND, and the control terminal of the low-side power transistor ML0 receives the data transmission inverted signal TX1, where the data transmission inverted signal TX1 is a complementary signal of the data transmission signal TX. The second low-side switch SL2 has a first terminal, a second terminal, and a control terminal, where the first terminal of the second low-side switch SL2 is coupled to the low-side bus port CANL, and the control terminal of the second low-side switch SL2 receives the second low-side control signal TL2. And the third low-side switch SL3 has a first terminal, a second terminal, and a control terminal, where the first terminal of the third low-side switch SL3 receives the second preset voltage VS2, the second terminal of the third low-side switch SL3 is coupled to the second terminal of the second low-side switch SL2, and the control terminal of the third low-side switch SL3 receives the third low-side control signal TL3. When the data transmission signal TX is at a logic low level, the voltage difference between the high-side signal VH and the low-side signal VL is between 1.8 V and 3.3 V, and when the data transmission signal TX is at a logic high level, the voltage difference between the high-side signal VH and the low-side signal VL is between - 300 mV and 300 mV.

In the embodiment shown in FIG. 10, when the data transmission signal TX is at a logic low level, the high-side power transistor MH0, the first high-side switch SH1, the low-side power transistor ML0, and the first low-side switch SL1 are turned on, and the second high-side switch SH2, the third high-side switch SH3, the second low-side switch SL2, and the third low-side switch SL3 are turned off. The high-side power transistor MH0, the low-side power transistor ML0, the first high-side switch SH1, and the first low-side switch SH1 are turned on, so that the line between the high-side bus port CANH and the supply voltage VCC is connected, and the line between the low-side bus port CANL and the reference ground GND is connected. The current flows through the load resistor RL, and the load voltage Vdiff is between 1.8 V and 3.3 V.

When the data transmission signal TX is at the logic high level, in the first operation cycle, the second high-side switch SH2, the third high-side switch SH3, the second low-side switch SL2, and the third low-side switch SL3 are turned on, and the high-side power transistor MH0, the first high-side switch SH1, the low-side power transistor ML0, and the first low-side switch SL1 are turned off. The high-side power transistor MH0, the low-side power transistor ML0, the first high-side switch SH1, and the first low-side switch SL1 are turned off, so that the line between the high-side bus port CANH and the power supply voltage VCC is disconnected, and the line between the low-side bus port CANL and the reference ground GND is disconnected. The second high-side switch SH2, the second low-side switch SL2, the third high-side switch SH3, and the third low-side switch SL3 are all turned on, so that the line between the high-side bus port CANH and the first preset voltage VS1 is connected, and the line between the low-side bus port CANL and the second preset voltage VS2 is connected. In the embodiment shown in FIG. 10, the first preset voltage VS1 is half of the supply voltage VCC, the second preset voltage VS2 is half of the supply voltage VCC, and the load voltage Vdiff is between -300 mV and 300 mV. In the second operation cycle, the high-side power transistor MH0, the first high-side switch SH1, the second high-side switch SH2, the third high-side switch SH3, the first low-side switch SL1, the low-side power transistor ML0, the second low-side switch SL2, and the third low-side switch SL3 are all turned off, so that the line between the high-side bus port CANH and the supply voltage VCC is disconnected, and the line between the low-side bus port CANL and the reference ground GND is disconnected, and the load voltage Vdiff is between -300 mV and 300 mV.

In the embodiment shown in FIG. 10, the CAN transceiver further includes a data reception port to output a data reception signal RX, where when the voltage difference between the high-side signal VH and the low-side signal VL is between 1.8 V and 3.3 V, the data reception signal RX is at a logic low level, and when the voltage difference between the high-side signal VH and the low-side signal VL is between -300 mV and 300 mV, the data reception signal RX is at a logic high level.

In the embodiment shown in FIG. 10, the high-side power transistor MH0 is a P-type field effect transistor, and the low-side power transistor ML0 is an N-type field effect transistor. The first high-side switch SH1, the second high-side switch SH2, and the third high-side switch SH3 are N-type field effect transistors. The supply voltage VCC is between 4.5 V and 5.5 V. The first preset voltage VS1 is equal to the second preset voltage VS2, where the first preset voltage VS1 is half of the supply voltage VCC.

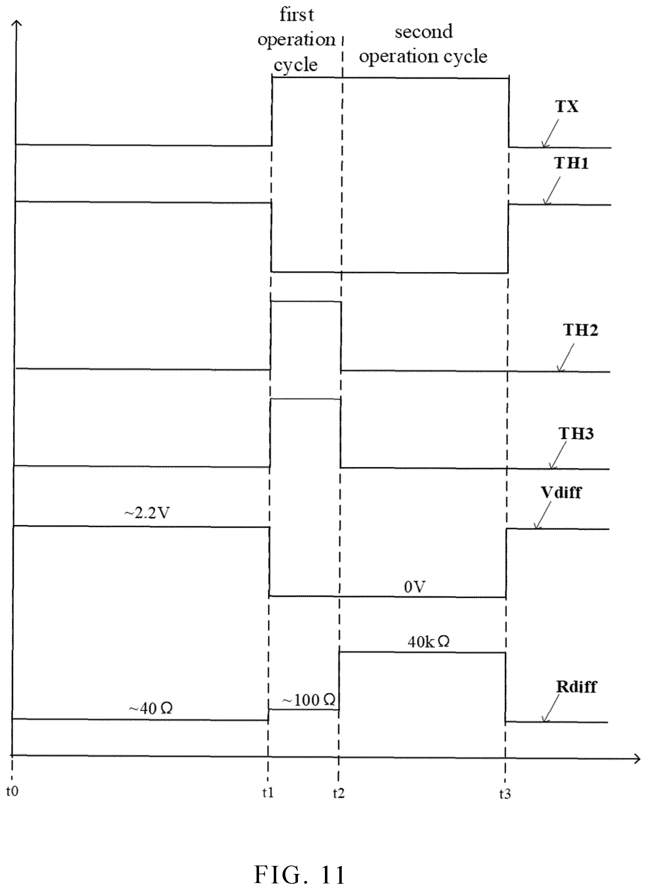

FIG. 11 is a waveform chart illustrating signals of the CAN transceiver as shown in FIG. 10, and the waveform of each signal in FIG. 11 will be described with reference to the CAN transceiver configuration shown in FIG. 10.

During the period from time t0 to time t1, the data transmission signal TX is at a logic low level, at this time the first high-side control signal TH1 and the first low-side control signal TL1 are at the logic high level, the second high-side control signal TH2 and the second low-side control signal TL2 are at the logic low level, and the third high-side control signal TH3 and the third low-side control signal TL3 are at the logic low level. Since the first high-side switch SH1, the second high-side switch SH2, the third high-side switch SH3, and the first low-side switch SL1, the second low-side switch SL2, and the third low-side switch SL3 are N-type field effect transistors, therefore during the period from time t0 to time t1, the high-side power transistor MH0, the first high-side switch SH1, the low-side power transistor ML0, and the first low-side switch SL1 are turned on, and the second high-side switch SH2, the third high-side switch SH3, the second low-side switch SL2, and the third low-side switch SL3 are turned off. During the period from time t0 to time t1, the load voltage Vdiff is 2.2 V, and the output impedance Rdiff is 40 Ω.

During the period from time t1 to time t2 (the first operation cycle), the data transmission signal TX is at a logic high level, the first high-side control signal TH1 and the first low-side control signal TL1 are at a logic low level, the second high-side control signal TH2 and the second low-side control signal TL2 are at a logic high level, the third high-side control signal TH3 and the third low-side control signal TL3 are at a logic high level, the second high-side switch SH2, the third high-side switch SH3, the second low-side switch SL2, and the third low-side switch SL3 are turned on, and the high-side power transistor MH0, the first high-side switch SH1, the low-side power transistor ML0, and the first low-side switch SL1 are turned off. During the period from time t1 to time t2, the load voltage Vdiff is 0 V, and the output impedance Rdiff is 100 Ω.

During the time period from time t2 to time t3 (the second operation cycle), the first high-side control signal TH1 and the first low-side control signal TL1 are at a logic low level, the second high-side control signal TH2 and the second low-side control signal TL2 are at a logic low level, and the third high-side control signal TH3 and the third low-side control signal TL3 are at a logic low level, and the high-side power transistor MH0, the first high-side switch SH1, the second high-side switch SH2, the third high-side switch SH3, the first low-side switch SL1, the low-side power transistor ML0, the second low-side switch SL2, and the third low-side switch SL3 are turned off. During the period from time t2 to time t3, the load voltage Vdiff is 0 V, and the output impedance Rdiff is 40 kΩ.

FIG. 11 illustrates a switching form of the multi-modal output of the CAN transceiver. As illustrated in FIG. 11, for example, when the data transmission signal TX is at a logic low level, the CAN transceiver is in the first mode, and when the data transmission signal TX is at a logic high level, the CAN transceiver is in the second mode or the third mode according to the difference of the operation cycle, and the CAN transceiver switches between the first mode, the third mode, and the second mode according to the difference of the data transmission signal TX. Through the multi-modal output of the CAN transceiver, the bus ringing problem can be eliminated by adjusting the output voltage and output impedance. In this process, the output characteristics in different modes can smoothly affect the bus signal, thus reducing the occurrence of ringing. Specifically, in the first mode, by generating a specific load voltage and differential impedance, potential signal reflection and interference can be suppressed, so as to remain the bus stable. In the third mode, by outputting the load voltage of 0V and high differential impedance, signal fluctuation and reflection are effectively reduced, thus improving the quality of bus signal. After entering the second mode, the load voltage of 0V and appropriate differential impedance are generated, thereby further ensuring the stability of data transmission on the bus and eliminating ringing phenomenon.

Therefore, by switching these modes sequentially, the CAN transceiver can effectively adjust the characteristics of the output voltage, reduce signal interference and optimize the bus communication quality, thereby solving the ringing problem. This method helps to maintain the stability and reliability of bus signals, and improve the accuracy and stability of data transmission without affecting the level of the normal communication protocol.

In the embodiments of the present disclosure, one or more of the high-side switches and the low-side switches can be configured according to the actual situation, and are not limited to three or four, which are all within the scope of patent protection of the present application.

Further, the access points of the second low-side switch SL2 and the second high-side switch SH2 may be at positions as shown in FIG. 4 to FIG. 10, or may be selectively connected to any node on the line between the high-side bus port CANH and the first high-side switch SH1, and between the low-side bus port CANL and the first low-side switch SL1. That is, during configuration of the circuit, the connection mode between the second low-side switch SL2 and the second high-side switch SH2 can be flexibly selected.

Moreover, for all the switches shown in FIG. 4 to FIG. 10, the type of the device is not limited in the present application, and the suitable type of switching device can be selected according to the specific situation during actual design and manufacture. Further, the setting of the number of voltages such as the first voltage V1, the second voltage V2, the third voltage V3, the fourth voltage V4, the first reference voltage VE1 and the second reference voltage VE2 is not limited, and one voltage port may be included, or a plurality of voltage ports may be included according to the configuration design of the circuit. For example, they may also be floating levels, i.e. without a clearly defined limit of the voltage form.

Although the present disclosure has been described with reference to several exemplary embodiments, it should be understood that the terms used are illustrative and exemplary rather than restrictive. Since the present disclosure can be implemented in various forms without departing from the spirit or essence of the disclosure, it should be understood that the above-described embodiments are not limited to any of the foregoing details, but should be construed broadly within the spirit and scope defined by the appended claims. Therefore, all changes and modifications falling within the scope of the claims or their equivalents shall be covered by the appended claims.

## Claims

1. A CAN transceiver, **characterized in that** the CAN transceiver comprises:
a data transmission port (TXD), configured to receive a data transmission signal (TX);
a control port, configured to receive a mode control signal (MODE);
a high-side bus port (CANH), configured to output a high-side signal (VH); and
a low-side bus port (CANL), configured to output a low-side signal (VL);
wherein when the mode control signal (MODE) is in a first state and the data transmission signal (TX) is at a logic low level, a voltage difference between the high-side signal (VH) and the low-side signal (VL) is between 1.8 V and 3.3 V; and when the mode control signal (MODE) is in the first state and the data transmission signal (TX) is at a logic high level, the voltage difference between the high-side signal (VH) and the low-side signal (VL) is between -1.8 V and -3.3 V; and
when the mode control signal (MODE) is in a second state and the data transmission signal (TX) is at the logic low level, the voltage difference between the high-side signal (VH) and the low-side signal (VL) is between 1.8 V and 3.3 V; and when the mode control signal (MODE) is in the second state and the data transmission signal (TX) is at the logic high level, the voltage difference between the high-side signal (VH) and the low-side signal (VL) is between -300 mV and 300 mV.

2. The CAN transceiver according to claim 1, wherein when the mode control signal (MODE) is in the first state, the mode control signal (MODE) is at the logic high level, and when the mode control signal (MODE) is in the second state, the mode control signal (MODE) is at the logic low level.

3. The CAN transceiver according to claim 1, further comprising a data reception port (RXD) configured to output a data reception signal (RX), wherein when the voltage difference between the high-side signal (VH) and the low-side signal (VL) is between 1.8 V and 3.3 V, the data reception signal (RX) is at the logic low level, and when the voltage difference between the high-side signal (VH) and the low-side signal (VL) is between -3.3 V and -1.8 V or between -300 mV and 300 mV, the data reception signal (RX) is at the logic high level.

4. The CAN transceiver according to claim 1, further comprising:
a high-side power transistor (MHO), having a first terminal, a second terminal, and a control terminal, wherein the first terminal of the high-side power transistor (MHO) is configured to receive a supply voltage, and the control terminal of the high-side power transistor (MHO) is configured to receive the data transmission signal (TX);
a first high-side switch (SH1), having a first terminal, a second terminal, and a control terminal, wherein the first terminal of the first high-side switch (SH1) is coupled to the second terminal of the high-side power transistor (MHO), the second terminal of the first high-side switch (SH1) is coupled to the high-side bus port (CANH), and the control terminal of the first high-side switch (SH1) is configured to receive a first high-side control signal;
a second high-side switch (SH2), having a first terminal, a second terminal, and a control terminal, wherein the first terminal of the second high-side switch (SH2) is coupled to the high-side bus port (CANH), and the control terminal of the second high-side switch (SH2) is configured to receive a second high-side control signal;
a third high-side switch (SH3), having a first terminal, a second terminal, and a control terminal, wherein the first terminal of the third high-side switch (SH3) is coupled to the second terminal of the second high-side switch (SH2), the second terminal of the third high-side switch (SH3) is configured to receive a first voltage (V1), and the control terminal of the third high-side switch (SH3) is configured to receive a third high-side control signal;
a fourth high-side switch (SH4), having a first terminal, a second terminal, and a control terminal, wherein the first terminal of the fourth high-side switch (SH4) is coupled to the second terminal of the second high-side switch (SH2), the second terminal of the fourth high-side switch (SH4) is configured to receive a second voltage (V2), and the control terminal of the fourth high-side switch (SH4) is configured to receive a fourth high-side control signal;
a first low-side switch (SL1), having a first terminal, a second terminal, and a control terminal, wherein the first terminal of the first low-side switch (SL1) is coupled to the low-side bus port (CANL), and the control terminal of the first low-side switch (SL1) is configured to receive a first low-side control signal;
a second low-side switch (SL2), having a first terminal, a second terminal, and a control terminal, wherein the first terminal of the second low-side switch (SL2) is coupled to the low-side bus port (CANL), and the control terminal of the second low-side switch (SL2) is configured to receive a second low-side control signal;
a third low-side switch (SL3), having a first terminal, a second terminal, and a control terminal, wherein the first terminal of the third low-side switch (SL3) is coupled to the second terminal of the second low-side switch (SL2), the second terminal of the third low-side switch (SL3) is configured to receive a third voltage, and the control terminal of the third low-side switch (SL3) is configured to receive a third low-side control signal;
a fourth low-side switch (SL4), having a first terminal, a second terminal, and a control terminal, wherein the first terminal of the fourth low-side switch (SL4) is coupled to the second terminal of the second low-side switch (SL2), the second terminal of the fourth low-side switch (SL4) is configured to receive a fourth voltage, and the control terminal of the fourth low-side switch (SL4) is configured to receive a fourth low-side control signal; and
a low-side power transistor (ML0), having a first terminal, a second terminal, and a control terminal, wherein the first terminal of the low-side power transistor (ML0) is coupled to the second terminal of the first low-side switch (SL1), the second terminal of the low-side power transistor (MLO) is coupled to a reference ground (GND), and the control terminal of the low-side power transistor (MLO) is configured to receive a data transmission inverted signal (TX1), wherein the data transmission inverted signal (TX1) is a complementary signal of the data transmission signal (TX).

5. The CAN transceiver according to claim 4, wherein
when the mode control signal (MODE) is in the first state and the data transmission signal (TX) is at the logic low level, the high-side power transistor (MHO), the first high-side switch (SH1), the low-side power transistor (ML0), and the first low-side switch (SL1) are turned on, and the second high-side switch (SH2), the third high-side switch (SH3), the fourth high-side switch (SH4), the second low-side switch (SL2), the third low-side switch (SL3), and the fourth low-side switch (SL4) are turned off;
when the mode control signal (MODE) is in the first state and the data transmission signal (TX) is at the logic high level, the second high-side switch (SH2), the fourth high-side switch (SH4), the second low-side switch (SL2), and the fourth low-side switch (SL4) are turned on, and the high-side power transistor (MHO), the first high-side switch (SH1), the third high-side switch (SH3), the first low-side switch (SL1), the third low-side switch (SL3), and the low-side power transistor (MLO) are turned off;
when the mode control signal (MODE) is in the second state and the data transmission signal (TX) is at the logic low level, the high-side power transistor (MHO), the first high-side switch (SH1), the first low-side switch (SL1), and the low-side power transistor (MLO) are turned on, and the second high-side switch (SH2), the third high-side switch (SH3), the fourth high-side switch (SH4), the second low-side switch (SL2), the third low-side switch (SL3), and the fourth low-side switch (SL4) are turned off; and
when the mode control signal (MODE) is in the second state and the data transmission signal (TX) is at the logic high level, the second high-side switch (SH2), the third high-side switch (SH3), the second low-side switch (SL2), and the third low-side switch (SL3) are turned on, and the high-side power transistor (MHO), the first high-side switch (SH1), the fourth high-side switch (SH4), the first low-side switch (SL1), the fourth low-side switch (SL4), and the low-side power transistor (MLO) are turned off, in a first operation cycle; and, the high-side power transistor (MHO), the first high-side switch (SH1), the second high-side switch (SH2), the third high-side switch (SH3), the fourth high-side switch (SH4), the first low-side switch (SL1), the second low-side switch (SL2), the third low-side switch (SL3), the fourth low-side switch (SL4), and the low-side power transistor (MLO) are turned off, in a second operation cycle.

6. The CAN transceiver according to claim 4, wherein
the high-side power transistor (MHO) is a P-type field effect transistor; or
the low-side power transistor (ML0) is an N-type field effect transistor; or
the first high-side switch (SH1), the second high-side switch (SH2), the third high-side switch (SH3), and the fourth high-side switch (SH4) are N-type field effect transistors; or
the first voltage (V1) is between 3.5 V and 5.5 V, the second voltage (V2) is between -1 V and 1 V, the third voltage is between 3.5 V and 5.5 V, and the fourth voltage is between 4.5 V and 5.5 V; or
the first voltage (V1) and the third voltage are equal to half of the supply voltage, the second voltage (V2) is equal to the reference ground (GND), and the fourth voltage is equal to the supply voltage.

7. The CAN transceiver according to claim 1, further comprising:
a high-side power transistor (MHO), having a first terminal, a second terminal, and a control terminal, wherein the first terminal of the high-side power transistor (MHO) is configured to receive a supply voltage, and the control terminal of the high-side power transistor (MHO) is configured to receive the data transmission signal (TX);
a first high-side switch (SH1), having a first terminal, a second terminal, and a control terminal, wherein the first terminal of the first high-side switch (SH1) is coupled to the second terminal of the high-side power transistor (MHO), and the control terminal of the first high-side switch (SH1) is configured to receive a first high-side control signal;
a high-side voltage tolerance circuit (61), having a first terminal and a second terminal, wherein the first terminal of the high-side voltage tolerance circuit (61) is coupled to the second terminal of the high-side power transistor (MHO), and the second terminal of the high-side voltage tolerance circuit (61) is coupled to the high-side bus port (CANH);
a second high-side switch (SH2), having a first terminal, a second terminal, and a control terminal, wherein the first terminal of the second high-side switch (SH2) is coupled to the first terminal of the high-side voltage tolerance circuit (61), and the control terminal of the second high-side switch (SH2) is configured to receive a second high-side control signal;
a third high-side switch (SH3), having a first terminal, a second terminal, and a control terminal, wherein the first terminal of the third high-side switch (SH3) is coupled to the second terminal of the second high-side switch (SH2), the second terminal of the third high-side switch (SH3) is coupled to a first voltage (V1), and the control terminal of the third high-side switch (SH3) is configured to receive a third high-side control signal;
a fourth high-side switch (SH4), having a first terminal, a second terminal, and a control terminal, wherein the first terminal of the fourth high-side switch (SH4) is coupled to the second terminal of the second high-side switch (SH2), the second terminal of the fourth high-side switch (SH4) is coupled to a second voltage (V2), and the control terminal of the fourth high-side switch (SH4) is configured to receive a fourth high-side control signal;
a low-side voltage tolerance circuit (62), having a first terminal and a second terminal, wherein the first terminal of the low-side voltage tolerance circuit (62) is coupled to the low-side bus port (CANL);
a first low-side switch (SL1), having a first terminal, a second terminal, and a control terminal, wherein the first terminal of the first low-side switch (SL1) is coupled to the second terminal of the low-side voltage tolerance circuit (62), and the control terminal of the first low-side switch (SL1) is configured to receive a first low-side control signal;
a second low-side switch (SL2), having a first terminal, a second terminal, and a control terminal, wherein the first terminal of the second low-side switch (SL2) is coupled to the second terminal of the low-side voltage tolerance circuit (62), and the control terminal of the second low-side switch (SL2) is configured to receive a second low-side control signal;
a third low-side switch (SL3), having a first terminal, a second terminal, and a control terminal, wherein the first terminal of the third low-side switch (SL3) is coupled to the second terminal of the second low-side switch (SL2), the second terminal of the third low-side switch (SL3) is configured to receive a third voltage, and the control terminal of the third low-side switch (SL3) is configured to receive a third low-side control signal; and
a fourth low-side switch (SL4), having a first terminal, a second terminal, and a control terminal, wherein the first terminal of the fourth low-side switch (SL4) is coupled to the second terminal of the second low-side switch (SL2), the second terminal of the fourth low-side switch (SL4) is configured to receive a fourth voltage, and the control terminal of the fourth low-side switch (SL4) is configured to receive a fourth low-side control signal.

8. A CAN transceiver, **characterized in that** the CAN transceiver comprises:
a data transmission port (TXD), configured to receive a data transmission signal (TX);
a high-side bus port (CANH), configured to output a high-side signal (VH); and
a low-side bus port (CANL), configured to output a low-side signal (VL);
wherein when the data transmission signal (TX) is at a logic low level, a voltage difference between the high-side signal (VH) and the low-side signal (VL) is between 1.8 V and 3.3 V, and when the data transmission signal (TX) is at a logic high level, the voltage difference between the high-side signal (VH) and the low-side signal (VL) is between -1.8 V and -3.3 V.

9. The CAN transceiver according to claim 8, further comprising a data reception port (RXD) configured to output a data reception signal (RX), wherein when the voltage difference between the high-side signal (VH) and the low-side signal (VL) is between 1.8 V and 3.3 V, the data reception signal (RX) is at the logic low level, and when the voltage difference between the high-side signal (VH) and the low-side signal (VL) is between -1.8 V and -3.3 V, the data reception signal (RX) is at the logic high level.

10. The CAN transceiver according to claim 8, further comprising:
a high-side power transistor (MHO), having a first terminal, a second terminal, and a control terminal, wherein the first terminal of the high-side power transistor (MHO) is configured to receive a supply voltage, and the control terminal of the high-side power transistor (MHO) is configured to receive the data transmission signal (TX);
a first high-side switch (SH1), having a first terminal, a second terminal, and a control terminal, wherein the first terminal of the first high-side switch (SH1) is coupled to the second terminal of the high-side power transistor (MHO), and the control terminal of the first high-side switch (SH1) is configured to receive a first high-side control signal;
a second high-side switch (SH2), having a first terminal, a second terminal, and a control terminal, wherein the first terminal of the second high-side switch (SH2) is coupled to the second terminal of the first high-side switch (SH1), and the control terminal of the second high-side switch (SH2) is configured to receive a second high-side control signal;
a third high-side switch (SH3), having a first terminal, a second terminal, and a control terminal, wherein the first terminal of the third high-side switch (SH3) is coupled to the second terminal of the second high-side switch (SH2), the second terminal of the third high-side switch (SH3) is coupled to a first reference voltage (VE1), and the control terminal of the third high-side switch (SH3) is configured to receive a third high-side control signal;
a first low-side switch (SL1), having a first terminal, a second terminal, and a control terminal, wherein the first terminal of the first low-side switch (SL1) is coupled to the low-side bus port (CANL), and the control terminal of the first low-side switch (SL1) is configured to receive a first low-side control signal;
a low-side power transistor (ML0), having a first terminal, a second terminal, and a control terminal, wherein the first terminal of the low-side power transistor (ML0) is coupled to the second terminal of the first low-side switch (SL1), the second terminal of the low-side power transistor (MLO) is coupled to a reference ground (GND), and the control terminal of the low-side power transistor (MLO) is configured to receive a data transmission inverted signal (TX1), wherein the data transmission inverted signal (TX1) is a complementary signal of the data transmission signal (TX);
a second low-side switch (SL2), having a first terminal, a second terminal, and a control terminal, wherein the first terminal of the second low-side switch (SL2) is coupled to the first terminal of the first low-side switch (SL1), and the control terminal of the second low-side switch (SL2) is configured to receive a second low-side control signal; and
a third low-side switch (SL3), having a first terminal, a second terminal, and a control terminal, wherein the first terminal of the third low-side switch (SL3) is coupled to the second terminal of the second low-side switch (SL2), the second terminal of the third low-side switch (SL3) is configured to receive a second reference voltage (VE2), and the control terminal of the third low-side switch (SL3) is configured to receive a third low-side control signal.

11. The CAN transceiver according to claim 10, wherein when the data transmission signal (TX) is at the logic low level, the high-side power transistor (MHO), the first high-side switch (SH1), the first low-side switch (SL1), and the low-side power transistor (MLO) are turned on, and the second high-side switch (SH2), the third high-side switch (SH3), the second low-side switch (SL2), and the third low-side switch (SL3) are turned off; and when the data transmission signal (TX) is at the logic high level, the second high-side switch (SH2), the third high-side switch (SH3), the second low-side switch (SL2), and the third low-side switch (SL3) are turned on, and the high-side power transistor (MHO), the first high-side switch (SH1), the first low-side switch (SL1), and the low-side power transistor (MLO) are turned off.

12. The CAN transceiver according to claim 10, wherein
the high-side power transistor (MHO) is a P-type field effect transistor; or
the low-side power transistor (ML0) is an N-type field effect transistor; or
the first high-side switch (SH1), the second high-side switch (SH2), and the third high-side switch (SH3) are N-type field effect transistors; or
the supply voltage is between 4.5 V and 5.5 V; or
the first reference voltage (VE1) is between -1 V and 1 V, and the second reference voltage (VE2) is between 4.5 V and 5.5 V

13. A CAN transceiver, **characterized in that** the CAN transceiver comprises:
a data transmission port (TXD), configured to receive a data transmission signal (TX);
a high-side bus port (CANH), configured to output a high-side signal (VH);
a low-side bus port (CANL), configured to output a low-side signal (VL);
a high-side power transistor (MHO), having a first terminal, a second terminal, and a control terminal, wherein the first terminal of the high-side power transistor (MHO) is configured to receive a supply voltage, and the control terminal of the high-side power transistor (MHO) is configured to receive the data transmission signal (TX);
a first high-side switch (SH1), having a first terminal, a second terminal, and a control terminal, wherein the first terminal of the first high-side switch (SH1) is coupled to the second terminal of the high-side power transistor (MHO), the second terminal of the first high-side switch (SH1) is coupled to the high-side bus port (CANH), and the control terminal of the first high-side switch (SH1) is configured to receive a first high-side control signal;
a second high-side switch (SH2), having a first terminal, a second terminal, and a control terminal, wherein the first terminal of the second high-side switch (SH2) is coupled to the second terminal of the first high-side switch (SH1), and the control terminal of the second high-side switch (SH2) is configured to receive a second high-side control signal;
a third high-side switch (SH3), having a first terminal, a second terminal, and a control terminal, wherein the first terminal of the third high-side switch (SH3) is coupled to the second terminal of the second high-side switch (SH2), the second terminal of the third high-side switch (SH3) is coupled to a first preset voltage (VS1), and the control terminal of the third high-side switch (SH3) is configured to receive a third high-side control signal;
a first low-side switch (SL1), having a first terminal, a second terminal, and a control terminal, wherein the first terminal of the first low-side switch (SL1) is coupled to the low-side bus port (CANL), and the control terminal of the first low-side switch (SL1) is configured to receive a first low-side control signal;
a low-side power transistor (ML0), having a first terminal, a second terminal, and a control terminal, wherein the first terminal of the low-side power transistor (ML0) is coupled to the second terminal of the first low-side switch (SL1), the second terminal of the low-side power transistor (MLO) is coupled to a reference ground (GND), and the control terminal of the low-side power transistor (MLO) is configured to receive a data transmission inverted signal (TX1), wherein the data transmission inverted signal (TX1) is a complementary signal of the data transmission signal (TX);
a second low-side switch (SL2), having a first terminal, a second terminal, and a control terminal, wherein the first terminal of the second low-side switch (SL2) is coupled to the low-side bus port (CANL), and the control terminal of the second low-side switch (SL2) is configured to receive a second low-side control signal; and
a third low-side switch (SL3), having a first terminal, a second terminal, and a control terminal, wherein the first terminal of the third low-side switch (SL3) is configured to receive a second preset voltage, the second terminal of the third low-side switch (SL3) is coupled to the second terminal of the second low-side switch (SL2), and the control terminal of the third low-side switch (SL3) is configured to receive a third low-side control signal;
wherein when the data transmission signal (TX) is at the logic low level, a voltage difference between the high-side signal (VH) and the low-side signal (VL) is between 1.8 V and 3.3 V, and when the data transmission signal (TX) is at the logic high level , the voltage difference between the high-side signal (VH) and the low-side signal (VL) is between -300 mV and 300 mV.

14. The CAN transceiver according to claim 13, wherein when the data transmission signal (TX) is at the logic low level, the high-side power transistor (MHO), the first high-side switch (SH1), the first low-side switch (SL1), and the low-side power transistor (MLO) are turned on, and the second high-side switch (SH2), the third high-side switch (SH3), the second low-side switch (SL2), and the third low-side switch (SL3) are turned off;
when the data transmission signal (TX) is at the logic high level, the second high-side switch (SH2), the third high-side switch (SH3), the second low-side switch (SL2), and the third low-side switch (SL3) are turned on, and the high-side power transistor (MHO), the first high-side switch (SH1), the first low-side switch (SL1), and the low-side power transistor (ML0) are turned off, in the first operation cycle; and
in a second operation cycle, a high-side power transistor (MHO), a first high-side switch (SH1), a second high-side switch (SH2), the third high-side switch (SH3), the first low-side switch (SL1), the second low-side switch (SL2), the third low-side switch (SL3), and the low-side power transistor (MLO) are turned off.

15. The CAN transceiver according to claim 13, further comprising a data reception port (RXD) configured to output a data reception signal (RX), wherein when the voltage difference between the high-side signal (VH) and the low-side signal (VL) is between 1.8 V and 3.3 V, the data reception signal (RX) is at the logic low level, and when the voltage difference between the high-side signal (VH) and the low-side signal (VL) is between -300 mV and 300 mV, the data reception signal (RX) is at the logic high level.

16. The CAN transceiver according to claim 13, wherein
the high-side power transistor (MHO) is a P-type field effect transistor; or
the low-side power transistor (ML0) is an N-type field effect transistor; or
the first high-side switch (SH1), the second high-side switch (SH2), and the third high-side switch (SH3) are N-type field effect transistors; or
the supply voltage is between 4.5 V and 5.5 V; or
the first preset voltage (VS1) is equal to the second preset voltage; or
the first preset voltage (VS1) is half of the supply voltage.
